# EUROPÄISCHE PATENTANMELDUNG

(11) **EP 0 557 855 A1**
(43) Veröffentlichungstag der Anmeldung: **01.09.1993**
(21) Anmeldenummer: 93102369.1
(22) Anmeldetag: 16.02.1993
(51) Int. Cl.: H01J 47/06, G01T 1/29

(54) **Ortsempfindlicher Detektor zum Nachweis von radioaktiver Strahlung**

(30) Priorität: 26.02.1992 DE 4205829
(71) Anmelder: LABORATORIUM PROF. DR. RUDOLF BERTHOLD GmbH & Co. KG, D-75323 Bad Wildbad (DE)
(72) Erfinder: Filthuth, Heinz, Prof. Dr., W-7540 Neuenbürg (DE)
(74) Vertreter: Frank, Gerhard, Dipl.-Phys.

(57) **Zusammenfassung**

Ein ortsempfindlicher Detektor zum Nachweis von radioaktiver Strahlung, insbesondere von Beta-Strahlung, befindet sich mindestens 5 mm oberhalb der Probenplatte (P), wobei letztere auf einem negativen Potential liegt. Durch eine Optimierung der dadurch erzeugten Saugspannung mit dem Abstand zwischen Probenplatte und Detektor läßt sich je nach Typ der nachzuweisenden Strahlung eine Optimierung der Ortsauflösung erzielen.

## Beschreibung

Die Erfindung betrifft einen ortsempfindlichen Detektor zum Nachweis von radioaktiver Strahlung von Proben auf einer Probenplatte, insbesondere von β-Strahlung.

Ein ortsempfindlicher Detektor zum Nachweis von radioaktiver Strahlung ist beispielsweise aus der DE-OS 37 35 296 bekannt.

Ein grundsätzliches Problem bei der Anwendung derartiger ortsempfindlicher Detektoren besteht darin, daß einerseits eine möglichst hohe Ortsauflösung erreicht werden soll, andererseits aber eine hohe Zählrate, um eine entsprechende Nachweisempfindlichkeit zu sichern. Beide Bedingungen sind in der Regel nur im Sinne eines Kompromisses zu erfüllen:
Zur Erhöhung der Ortsempfindlichkeit ist es bekannt, zwischen den Detektor und die Probenplatte einen Kollimator beispielsweise in Form eines Lochbleches anzuordnen, der aus der in der Regel isotrop anfallenden Strahlung nur einen geringen Raumwinkel auswählt, nämlich solche Strahlen, die praktisch senkrecht auf den Detektor einfallen und somit die genaueste Ortsinformation vermitteln. Diese Auswahl führt zu einer Verbesserung der Ortsauflösung, beeinträchtigt aber die Nachweisempfindlichkeit, da nur ein Bruchteil der anfallenden Teilchen zu registrierbaren Zählimpulsen führt.

Eine Verbesserung dieser Situation ist möglich (DE-OS 39 15 613), wenn eine solche Kollimatorplatte auf ihrer Ober- und Unterseite mit einer leitenden Schicht versehen wird, zwischen denen ein Potential derart gelegt ist, daß innerhalb der Bohrungen der Kollimatorplatte ein elektrisches Feld entsteht, das auf die austretenden, nachzuweisenden Teilchen der Probenplatte einen Saugeffekt ausübt und somit ohne Beeinträchtigung der Ortsauflösung eine größere Anzahl von Teilchen einer Zählung durch die Zählkammer zuführt und somit die Nachweisempfindlichkeit erhöht.

Bei hohen Anforderungen an die Ortsauflösung (im Bereich von 1mm und darunter) sind die mechanischen Anforderungen an eine solche Kollimatorplatte jedoch sehr hoch, da bei einer derartigen Kollimatorplatte von den Abmessungen von etwa 20x20cm etwa 80.000 Bohrungen eingebracht werden müssen, um den Anforderungen Rechnung zu tragen.

Eine solche Kollimatorplatte stellt daher auch einen nicht unwesentlichen Kostenfaktor beim Bau eines ortsempfindlichen Detektors dar.

Die vorteilhafte Wirkung eines elektrischen Feldes zur Erhöhung der Nachweisempfindlichkeit wurde auch schon bei einem Vielfachzähler ausgenutzt (DE-OS 39 15 612), bei dem eine Mehrzahl von Proben nicht kontinuierlich auf einer Probenplatte verteilt ist, sondern in einzelnen Probenschälchen oder sonstigen Behältern (z.B. Mikrotiterplatten) sich befindet. Hier kann ein solches "Saugfeld" insbesondere beim Nachweis schwach-energetischer Strahlung wie z.B. β-Strahlung von 3H auch noch solche Elektronen in den Nachweisbereich des Zählrohrs zu ziehen, die ansonsten wegen ihrer geringen Energie und der daraus resultierenden geringen Reichweite auch bei dichtest möglicher Annäherung des Detektors an die Probenschälchen "verloren" wären, da sie zu keinen Zählimpulsen führen. Die Anwendung eines solchen Saugfeldes hat hier also ausschließlich die Funktion der Erhöhung der Nachweisempfindlichkeit, da es bei einem derartigen Vielfachzähler nicht um einen ortsempfindlichen Detektor im Sinne der Erfindung geht, sondern lediglich um die Erfassung der radioaktiven Strahlung von vorgegebenen Teilflächen einer Gesamtfläche.

Die erfindungsgemäße Lösung zeigt nun überraschenderweise, daß ein derartiges Saugfeld auch bei der Ausmessung von Proben auf einer Probenplatte auch dann zu einer wesentlichen Erhöhung der Ortsauflösung führt, wenn keine sonstigen mechanischen Kollimatoreinrichtungen, wie z.B. die oben erwähnte Kollimatorplatte, vorhanden sind. Dieser Effekt der Erhöhung der Ortsauflösung tritt jedoch nur dann auf, wenn zwischen auszumessender Probenplatte einerseits und unterer Nachweisebene (Auslesegitter) des verwendeten ortsempfindlichen Detektors ein Mindestabstand eingehalten wird, was in ersichtlichem Gegensatz zur bisher allgemein anerkannten Theorie steht, daß die Ortsauflösung eines ortsempfindlichen Detektors umso größer ist, je näher der Detektor zur auszumessenden Probenplatte gebracht werden kann (wobei Abstände von 1mm bis 2mm als praktisch machbar erreicht wurden).

Die in einer dünnen Oberflächenschicht sich ansammelnden schwachenergetischen Partikel mit niedriger Reichweite haben bei dieser bisher favorisierten Lösung, nämlich dem möglich dichten Aufsitzen des Detektors auf der Probenplatte, den unangenehmen Effekt, daß sie zu einer "Linienverbreiterung" beigetragen haben. Durch den im Vergleich zu den bisherigen Lösungen relativ großen Abstand zwischen ortsempfindlichen Zählrohr und Probenplatte kann als Effekt folglich in Frage kommen, daß sehr schwach-energetische Teilchen, die bisher (infolge der isotropen Strahlungscharakteristik) eine Verschlechterung der Ortsauflösung bewirkt haben, offenbar nicht mehr das Zählrohr erreichen.

Die Erfindung erreicht mit dieser Maßnahme eine Verbesserung der Ortsauflösung bei den wesentlichen radioaktiven Strahlungsquellen, insbesondere auch solche mit höher-energetischem Strahlungsanteil, wie z.B. 14C und 32P. Hier bewirken die beiden in Frage kommenden Auswirkungen der erfindungsgemäßen Merkmalskombination, daß der bei der Auswertung solcher Strahlung störende nieder-energetische Strahlungsanteil entweder die Zählkammer gar nicht mehr erreicht, oder unter der Wirkung der Saugspannung weitgehend senkrecht auf dieser auftrifft.

Einfach zusammengefaßt:
Mit dem Saugfeld werden die Oberflächenladungen - erzeugt durch Ladungen der Primärionisation von Spuren aus der Probe selbst und vom energie-armen Teil des β-Spektrums auf der Probenoberfläche in den Detektor hineingezogen und durch Impulshöhendiskriminierung gegenüber der durchdringenden Strahlung nachgewiesen.

Die Erfindung zeigt somit einen äußerst einfachen Weg auf, bei Strahlungsquellen mit verschiedenem Energiespektrum der emittierten Teilchen mit einfachsten Mitteln eine wesentliche Erhöhung der Ortsauflösung zu erreichen; je nach Strahlungsquelle kann der Abstand zwischen Probenplatte und Detektor oder auch der Wert der Saugspannung variiert werden, um im konkreten Einzelfall eine Optimierung der Ortsauflösung zu erzielen, d.h. in der Praxis, um möglichst schmale und steile "peaks" zu erreichen, die auch bei Probenabständen geringer als 1 mm noch getrennt wahrnehmbar sind.

Eine weitere Erhöhung der Ortsauflösung kann erreicht werden, wenn die oben erwähnte Kollimatorplatte (DE-OS 39 15 613) zwischen der Probenplatte und dem Detektor angeordnet wird, wobei überraschenderweise nur eine solche Anordnung zu einer merklichen Verbesserung führt, bei der der Abstand der Kollimatorplatte vom Detektor einige Millimeter, beispielsweise 5 mm, beträgt. Hiermit wird sozusagen ein "Hybrid-Kollimator" geschaffen insofern, als eine bestimmte Konstellation zwischen mechanischer Kollimation durch die Kollimatorplatte und "elektrischer Kollimation" vorgegeben wird, die sich als besonders effektiv herausgestellt hat.

Zwei Ausführungsbeispiele des erfindungsgemäßen Detektors werden anhand von Zeichnungen noch näher erläutert; es zeigen:

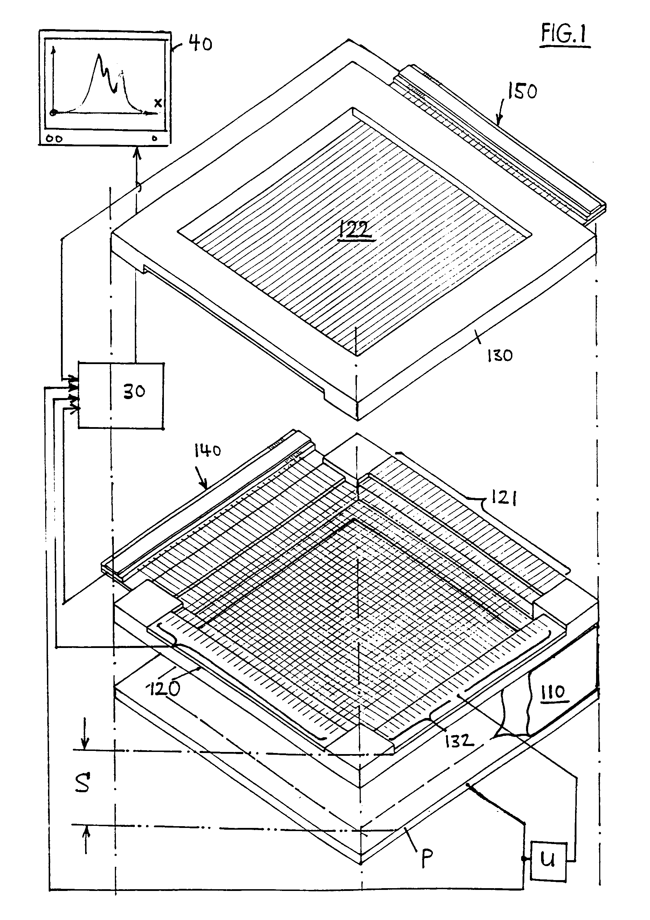

- Figur 1:: eine Explosionsdarstellung des ersten Ausführrungsbeispiels eines ortsempfindlichen Detektors (ohne Kollimatorplatte),
- Figur 2:: eine schematische Darstellung einer Meßanordnung,
- Figur 3:: ein Meßsepktrum, und
- Figur 4:: eine Teil-Explosionsdarstellung eines zweiten Ausführungsbeispiels eines Detektors (mit Kollimatorplatte).

Bei dem in der Figur dargestellten ortsempfindlichen Detektor handelt es sich um ein Zählrohr, wie es in seiner Funktionsweise und in seinem konstruktiven Aufbau im einzelnen in der DE-OS 37 35 296 beschrieben ist, so daß hierauf im einzelnen nicht mehr näher eingegangen werden braucht.

Ein erster Rahmen 120 trägt eine untere (der Probenplatte P nächste) Ebene von Auslesedrähten 132, die mit einer Verzögerungsleitung 140 verbunden sind, sowie darüber liegend und senkrecht zu den Drähten 132 eine Ebene mit Anodendrähten 121.

Der zweite Rahmen 130 trägt ein zweites Drahtgitter 122, das mit einer zweiten Verzögerungsleitung 150 verbunden ist. Die beiden Drahtgitter 122 und 132 dienen zur Auslesung von Impulsen, die von geladenen Partikeln verursacht werden, die von einer bestimmten Stelle der Probenplatte P stammen. Innerhalb eines bestimmten Bereichs wird somit in beiden Drahtgittern ein Zählimpuls erzeugt, der zur zugeordneten Verzögerungsleitung 140,150 gelangt und von dort in bekannter Weise einer Auswerteeinheit 30 zugeführt wird, die aus der Laufzeit der Zählimpulse die jeweilige x- y-Koordinate und somit den Ausgangspunkt der nachgewiesenen Strahlung bzw. des den Zählimpuls verursachenden Partikels ermittelt.

Die beiden Rahmen 120 und 130 sind nur zur Verdeutlichung im Sinne einer Explosionsdarstellung getrennt, sitzen jedoch in der Praxis unmittelbar aufeinander, so daß zwischen den einzelnen Zähldrahtebenen nur Abstände im Bereich von 1mm bis 2mm erreicht werden.

Im Gegensatz hierzu befindet sich zwischen der unteren Ausleseebene, dem Zähldrahtgitter 132, und der Probenplatte P ein Abstand S der bei etwa 5mm bis 10mm liegt. Ein solcher Abstand kann beispielsweise je nach gewünschtem Ausmaß durch Zwischenlegung eines oder mehrerer Rahmenteile 110 erreicht werden, der in der Zeichnung schematisch angedeutet ist.

Zwischen der Probenplatte P und der unteren Ausleseebene, dem Zähldrahtgitter 132, ist eine Spannung U angelegt, derart, daß die Probenplatte P auf negativem Potential gegenüber diesem Drahtgitter 132 liegt; eine einfache Ausführung besteht darin, das Zähldrahtgitter 132 auf Massepotential zu legen und das Potential der Probenplatte zwischen -1000 und -3000 Volt zu variieren.

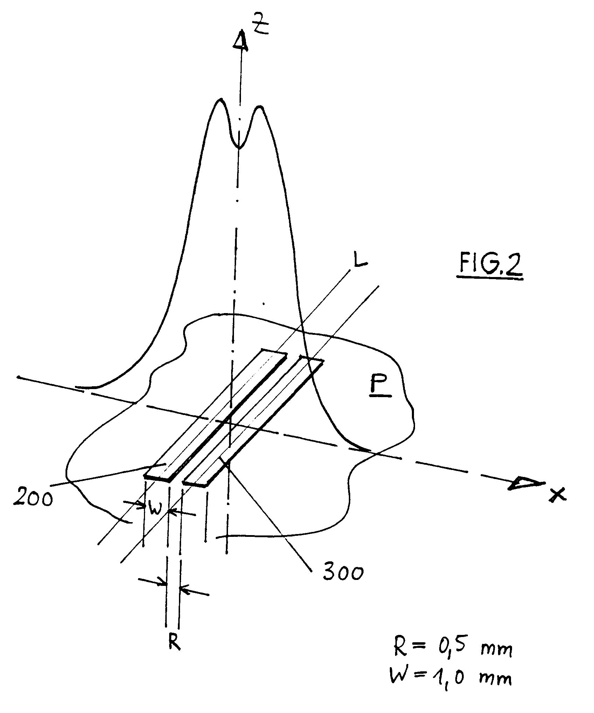

Bei einer bevorzugten Ausführungsform des erfindungsgemäßen Detektors betrug der Abstand S zwischen Probenplatte und Auslesedrähten 132 5 mm und die Probenplatte P befand sich auf negativem Potential von -2900 Volt. Gemessen wurde auf der Probenplatte ein 14C-Strahler, mit dem ein metallisches Substrat markiert war, das in Form von Streifen 200,300 auf der Probenplatte P aufgetragen war (Figur 2).

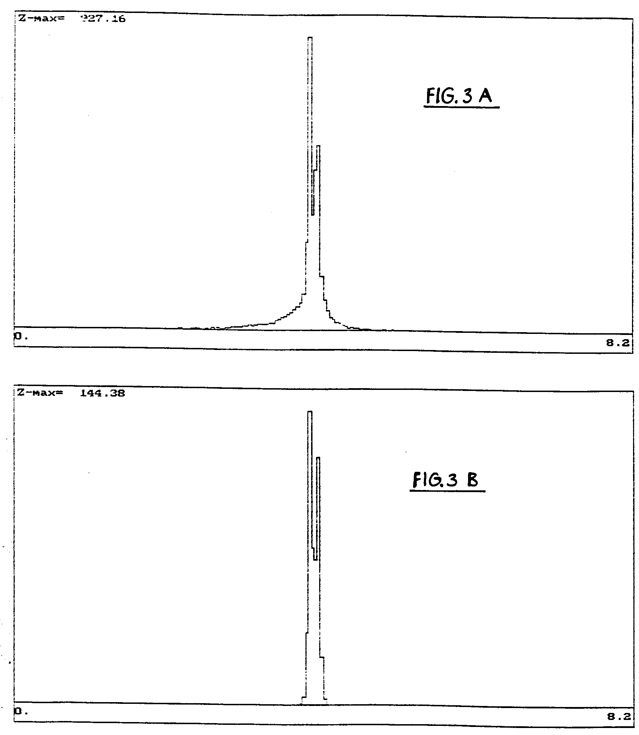

Die Messung (Figur 3A,3B) zeigt, daß der Abstand der beiden Streifen 200,300 von nur 0,5 mm einwandfrei auflösbar ist.

Eine weitere Verbesserung der Ortsauflösung kann durch Anwendung einer Impulshöhendiskriminierung bei der Auswertung ("elektronischer Kollimator" gemäß DE-PS 30 15 716) erreicht werden (Figur 3B), wodurch eine noch schmalere Linie erzielbar ist, da die nicht durch die Saugspannung senkrecht "ausgerichteten" Partikel durch dieses Verfahren von der Auswertung ausgeschlossen werden.

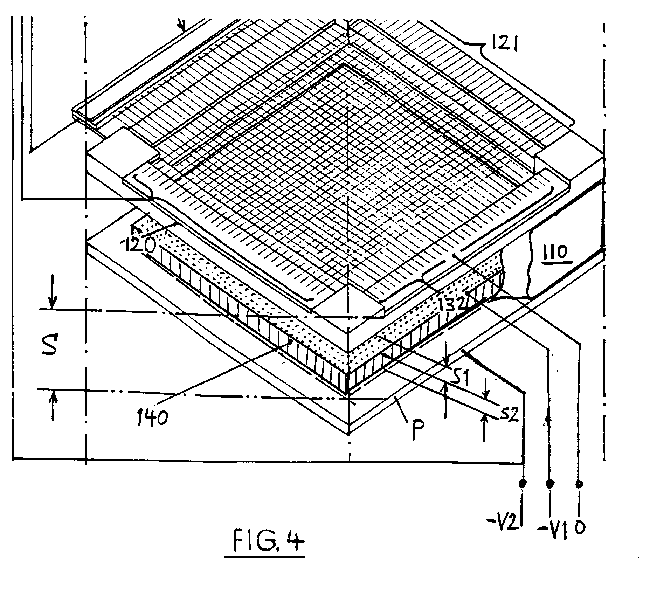

Beim zweiten Ausführungsbeispiel des erfindungsgemäßen Detektors (Figur 4) ist eine Kollimatorplatte 140 zwischen Probe P und dem unteren Rahmen 120 eingefügt, die unmittelbar über der Probenplatte P angeordnet ist, zwischen deren Oberseite und dem Rahmen 120 aber ein größerer Abstand S1 von mindestens 5 mm besteht. Die Dicke S2 der Kollimatorplatte beträgt ebenfalls etwa 5 mm. Bei einer Abmessung von etwa 20 x 20 cm weist die Kollimatorplatte etwa 80.000 Bohrungen zur Kollimation der durchtretenden Strahlung auf.

Wie beim ersten Ausführungsbeispiel ist zwischen der Probenplatte P und der unteren Ausleseebene, dem Zähldrahtgitter 132, eine Spannung U angelegt, derart, daß die Probenplatte P auf negativem Potential gegenüber dem Drahtgitter 132 liegt. Bei dem in Figur 4 dargestellten Ausführungsbeispiel liegt die untere Ausleseebene auf Massepotential (V = 0), die obere, leitende Schicht der Kollimatorplatte 140 liegt auf einem Potential V1 von etwa -1500 Volt und die Probenplatte liegt auf einem Potential V2 von etwa -3000 Volt. Zwischen der leitenden Ober- und Unterseite der Kollimatorplatte 140 besteht diese aus einem Kern aus nicht-leitendem Material wie z.B. Fiberglas-Epoxy (auch als "G10" bezeichnet). Ein derartiger "Hybrid-Kollimator" wie er in Figur 4 dargestellt ist, bringt eine nochmalige Verbesserung der Ortsauflösung, d.h., die in Figur 3B dargestellte Messung wird nochmals verbessert, indem der "Fuß" des Spektrums weiter verengt und der Einschnitt zwischen den beiden Peaks noch tiefer ausfällt.

Bei Anwendungsfällen, bei denen der erhöhte Aufwand für die Kollimatorplatte vertretbar ist, ist damit nochmals eine Verbesserung der Ortsauflösung erzielbar.

## Patentansprüche

1. Ortsempfindlicher Detektor zum Nachweis von radioaktiver Strahlung von Proben auf einer Probenplatte, insbesondere von β-Strahlung,
dadurch gekennzeichnet, daß in der Meßposition die Probenplatte (P) mindestens 5 mm unterhalb der unteren Nachweisebene (132) des Detektors und gegenüber dieser auf einem negativen Potential (-u) liegt.

2. Ortsempfindlicher Detektor nach Anspruch 1, dadurch gekennzeichnet, daß der ortsempfindliche Detektor ein Proportionalzählrohr mit einer mittleren Anodendrahtebene (121) und hierzu parallelen Auslese-Drahtebenen (122,132) ist.

3. Ortsempfindlicher Detektor nach Anspruch 1, dadurch gekennzeichnet, daß der Abstand (S) der Probenplatte (P) von der unteren Zähldrahtebene (132) 5mm bis 10mm beträgt.

4. Ortsempfindlicher Detektor nach Anspruch 1, dadurch gekennzeichnet, daß das Potential (-u) der Probenplatte (P) in der Größenordnung 10²...10⁴ Volt beträgt und die untere Auslesedrahtebene (132) auf Nullpotential liegt.

5. Ortsempfindlicher Detektor nach Anspruch 1, dadurch gekennzeichnet, daß der Detektor eine Auswerteschaltung beinhaltet, durch die nur solche Zählimpulse zur Auswertung zugelassen werden, die innerhalb eines vorgebbaren Impulsfensters liegen (elektronischer Kollimator).

6. Ortsempfindlicher Detektor nach Anspruch 1 oder 3, dadurch gekennzeichnet, daß zwischen der Probenplatte (P) und der unteren Nachweisebene (132) eine Kollimatorplatte (140) angeordnet ist, deren Abstand (S1) zur unteren Nachweisebene (132) mindestens 5 mm beträgt (mechanischer Kollimator).

7. Ortsempfindlicher Detektor nach Anspruch 4 und 6, dadurch gekennzeichnet, daß die Kollimatorplatte (140) aus einem Isolatorkern und einer leitenden Schicht auf ihrer Oberseite und ihrer Unterseite aufgebaut ist, und daß das negative Potential (V1) der oberen, dem Detektor zugewandten, leitenden Schicht zwischen Masse und dem negativen Potential (V2) der Probenplatte (P) liegt.

8. Ortsempfindlicher Detektor nach Anspruch 7, dadurch gekennzeichnet, daß das Potential (V1) der oberen, leitenden Schicht der Kollimatorplatte (140) bei -1500 Volt, und das Potential (V2) der Probenplatte (P) bei -3000 Volt liegt.

9. Ortsempfindlicher Detektor nach Anspruch 1, dadurch gekennzeichnet, daß an der Probenplatte (P) oder unmittelbar über ihr Zählimpulse (beispielsweise mit separatem Drahtgitter) ausgelesen werden, die in Koinzidenz mit den Zählimpulsen der Anodendrahtebene (121) des Detektors gemessen werden, wodurch der Einfluß von Verunreinigungen wie z.B. Staubpartikel an den Zähldrähten des Detektors eliminiert wird.

10. Verwendung eines Detektors nach einem der vorhergehenden Ansprüche zur ortsempfindlichen Messung von radioaktiven Präparaten mit höher-energetischem Anteil von β-Strahlung wie 14C oder 32P.
